# EUROPEAN PATENT SPECIFICATION

(11) **EP 1 726 491 B1**
(45) Date of publication and mention of the grant of the patent: **23.11.2011**
(21) Application number: 06005910.2
(22) Date of filing: 22.03.2006
(51) Int. Cl.: B60R 21/0136, B60R 19/48, B60R 21/01, B60R 21/34

(54) **Collision detecting apparatus for vehicle**
Vorrichtung zur Kollisionserkennung in einem Fahrzeug
Dispositif de détection de collision pour véhicule

(30) Priority: 04.04.2005 JP 2005107948
(43) Date of publication of application: 29.11.2006
(73) Proprietor: DENSO CORPORATION, Kariya-city, Aichi-pref, 448-8661 (JP); Hitachi Cable, Ltd., Tokyo 101-8166 (JP); TOYOTA JIDOSHA KABUSHIKI KAISHA, Aichi-pref., 471-8571 (JP)
(72) Inventor: Otaka, Koji c/o Denso Corporation, Kariya-city Aichi-pref., 448-8661 (JP); Kobayashi, Shigenori c/o Denso Corporation, Kariya-city Aichi-pref., 448-8661 (JP); Iyoda, Motomi c/o Toyota Jidosha Kabushiki Kaisha, Toyota-city Aichi-pref., 471-8571 (JP); Nakagawa, Yukio c/o Toyota Jidosha Kabushiki Kaisha, Toyota-city Aichi-pref., 471-8571 (JP); Hishida, Yasuyuki c/o Hitachi Cable, Ltd., Chiyoda-ku Tokyo 101-8166 (JP); Saito, Takahiro c/o Hitachi Cable, Ltd., Chiyoda-ku Tokyo 101-8166 (JP)
(74) Representative: Kuhnen & Wacker

(56) References cited:
- EP-A- 1 574 399
- EP-A- 1 702 809
- WO-A-2004/033261
- WO-A-2006/046771
- US-A1- 2006 091 299

## Description

The present invention relates to a collision detecting apparatus for vehicles, particularly, relates to an apparatus capable of adequately detecting a collision, such as a collision with a pedestrian, at a bumper.

According to a collision detecting apparatus disclosed in Japanese Unexamined Patent Publications No. JP-A-05-116592 and No. JP-A-07-190732, an optical fiber having a light leak property is disposed to extend around a front face of the vehicle, and a decrease of light in the optical fiber due to a collision load applied to the vehicle is detected by an optical fiber sensor.

Further, in JP-A-05-116592, the optical fiber sensor has a cylindrical collision load transmission member having projections therein for increasing partial deformation of the optical fiber by concentrating the external collision load to predetermined positions of the optical fiber. Furthermore, JP-A-05-116592 discloses to cover the optical fiber with an elastic member such as a rubber.

WO 2004/033261 discloses a collision detecting apparatus according to the preamble of claim 1.

Also, it is known to arrange a collision detecting apparatus between a bumper reinforcement member and a front bumper of the vehicle so as to quickly detect a collision, such as a collision with a pedestrian, even if the collision occurs at any positions of the front bumper. The optical fiber sensor generally has an optical fiber unit including the optical fiber and a light transmitting and receiving circuit at least. The optical fiber is deformable by the collision load and therefore the quantity of light transmitting in the optical fiber changes in accordance with the intensity of the collision load. The light transmitting and receiving circuit introduces and detects the light into and from the optical fiber.

To improve collision load detecting sensitivity of the optical fiber sensor, the optical fiber unit is required to be effectively deformable in a range of an allowable deformation rate against the collision load input to the optical fiber sensor. The optical fiber unit is mechanically supported by a bumper reinforcement member in front of the bumper reinforcement member so as to avoid the optical fiber unit from entirely moving backward by the collision load from a front side.

In consideration of a width of the front bumper in a vertical direction and easy deformability of the front bumper, it is proposed to arrange a load transmission plate between a bumper absorber of the front bumper and the optical fiber unit, for transmitting the collision load input to the front bumper to the optical fiber unit. In this case, the collision load is concentrated to the load transmission plate, and then is transmitted to the bumper reinforcement member while deforming the optical fiber unit.

However, the load transmission plate extends long in the right and left direction of the vehicle. If the collision load is partly applied to the load transmission plate and the load transmission plate is partly deformed at the part where the collision load is concentrated, the optical fiber unit is largely deformed at the part where the collision load is concentrated.

On the contrary, in a case that the front bumper receives the collision load uniformly in a longitudinally wide area, the load transmission plate is not partly deformed. Thus, the optical fiber unit receives the collision load through a longitudinally wide area.

Namely, a deforming condition of the optical fiber unit is different between when the collision load is partly applied to the load transmission plate and when the collision load is widely applied to the load transmission plate, even if the sum of the collision load transmitted from the load transmission plate to the optical fiber unit is equal.

Further, the collision object may have various shapes. A degree of concentration of the collision load in the front bumper, i.e., a distribution pattern of the collision load in the right and left direction is different depending on the shape of the collision object. With this, a degree of concentration of the collision load in the load transmission plate may vary depending on the shape of the collision object. Namely, the transmission of the collision load is likely to be affected by the shape of the collision object and the position of the collision. Accordingly, even if the intensity of the collision load is equal, the output of the optical fiber sensor is likely to be different and uneven.

The present invention is made in view of the foregoing problem, and it is an object of the present invention to provide a vehicle collision detecting apparatus capable of decreasing unevenness of detecting sensitivity.

This object, in accordance with the present invention, is achived by a collision detecting apparatus with the features of appended claim 1.

According to an aspect of the present invention, the collision detecting apparatus has an optical fiber sensor and a collision detecting circuit. The optical fiber sensor includes an optical fiber and a light transmitting and receiving circuit. The optical fiber extends in a right and left direction of the vehicle between a bumper and a bumper reinforcement member. The light transmitting and receiving circuit introduces light to the optical fiber and detects the light from the optical fiber. The collision detecting circuit detects information relating to a collision load applied to the bumper based on a change of an output signal of the optical fiber sensor due to a deformation of the optical fiber at a time of collision.

The collision detecting apparatus further has a load transmission plate and a guiding mechanism for supporting the load transmission plate. The load transmission plate extends in the right and left direction between the bumper and the optical fiber and transmits the collision load from the bumper to the optical fiber. The guiding mechanism supports the load transmission plate in a manner that the load transmission plate is more likely to be moved in a substantially front and rear direction with respect to the bumper reinforcement member than elastically deformed by the collision load.

If the load transmission plate is fixed to a part of a vehicle body, e.g., to the bumper reinforcement member, it is likely to be partly deformed when the collision load is partly applied. In the present invention, the load transmission plate is supported more likely to be moved in the rear direction than elastically deformed. That is, even if the collision load is partly concentrated to the bumper and partly applied to the load transmission plate, the whole of the load transmission plate is moved toward the bumper reinforcement member. Thus, it is less likely that the load transmission plate will be partly deformed or bent.

Since the whole of the load transmission plate is moved without partly deforming, the collision load is transmitted to the optical fiber widely in the right and left direction without partly largely deforming the optical fiber. Accordingly, unevenness of sensing characteristic of the optical fiber sensor reduces, resulting in an improvement of detection accuracy.

Other objects, features and advantages of the present invention will become more apparent from the following detailed description made with reference to the accompanying drawings, in which like parts are designated by like reference numbers and in which:
Fig. 1 is a schematic transparent plan view of a vehicle for showing an arrangement of a pedestrian collision sensor and a pedestrian protection apparatus according to an example embodiment of the present invention;
Fig. 2 is an exploded perspective view of the pedestrian collision sensor with a front bumper according to the example embodiment of the present invention;
Fig. 3 is a schematic top view of the pedestrian collision sensor for showing the arrangement thereof according to the example embodiment of the present invention;
Fig. 4 is a schematic circuit diagram of the pedestrian collision sensor according to the example embodiment of the present invention;
Fig. 5A is a horizontal cross-sectional view of an optical fiber unit of the pedestrian collision sensor according to the example embodiment of the present invention;
Fig. 5B is a vertical cross-sectional view of the optical fiber unit according to the example embodiment of the present invention;
Fig. 6 is a vertical cross-sectional view of a guiding mechanism of the pedestrian collision sensor according to the example embodiment of the present invention;
Fig. 7 is a perspective view of an extending member of the guiding mechanism according to the example embodiment of the present invention;
Fig. 8 is a schematic top view of the guiding mechanism shown in Fig. 6;
Fig. 9 is a schematic vertical cross-sectional view of a guiding mechanism according to another example embodiment of the present invention; and
Fig. 10 is a schematic vertical cross-sectional view of a guiding mechanism according to further another example embodiment of the present invention.

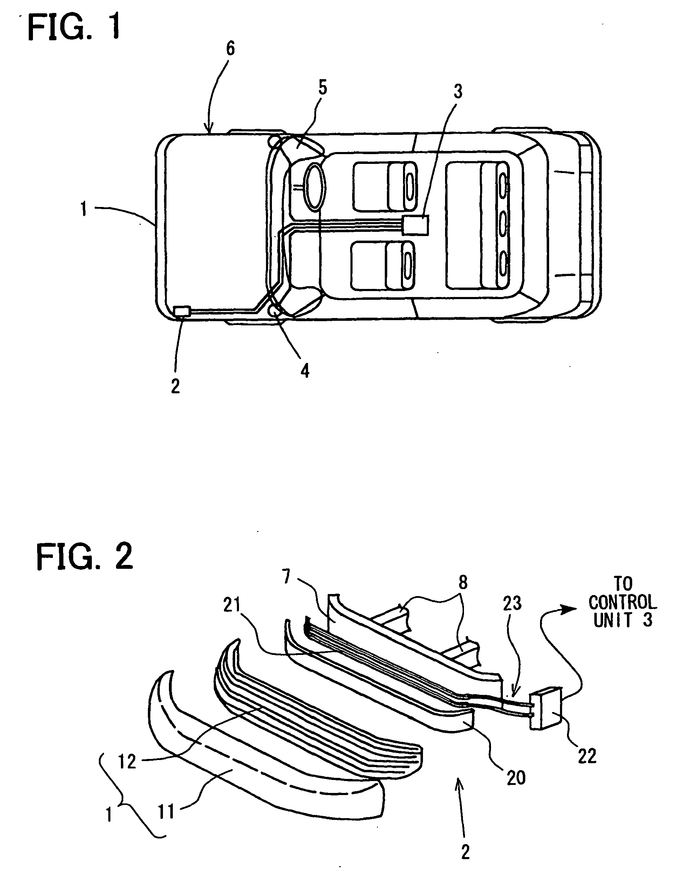

Hereafter, an example embodiment of the present invention will be described with reference to Figs. 1 through 8. In the example embodiment, the collision detecting apparatus of the present invention is exemplary employed to a vehicle protection apparatus for detecting a collision of a vehicle with a collision object such as a pedestrian. The present invention is not limited to the following example embodiments, but the technical idea of the present invention can be implemented by combinations of conventional structural elements.

### (General Structure)

First, a general structure of the vehicle protection apparatus will be described with reference to Fig. 1. As shown in Fig. 1, the vehicle protection apparatus has a collision detecting apparatus (hereafter, referred to as pedestrian collision sensor) 2, a pedestrian protection control unit 3, a pillar air bag expansion device 4, and a pillar air bag 5 for protecting a pedestrian. In Fig. 1, numeral 1 denotes a front bumper, and numeral 6 denotes a vehicle body.

The pedestrian protection control unit 3, the pillar air bag expansion device 4 and the pillar air bag 5 construct an air bag-type pedestrian protection apparatus for protecting a pedestrian, in particular, a head of the pedestrian, who may fall over a bonnet at the time of a collision. In Fig. 1, the pedestrian collision sensor 2 is schematically illustrated.

### (Structure of Pedestrian Collision Sensor 2)

Next, the structure of the pedestrian collision sensor 2 will be described with reference to Figs. 2 to 4. As shown in Fig. 2, the pedestrian collision sensor 2 includes a load transmission plate 20, an optical fiber unit 21, and a circuit unit 22. The load transmission plate 20 and the optical fiber unit 21 are disposed to extend in a right and left direction of the vehicle along a front surface of a bumper reinforcement member 7, between the front bumper 1 and the bumper reinforcement member 7.

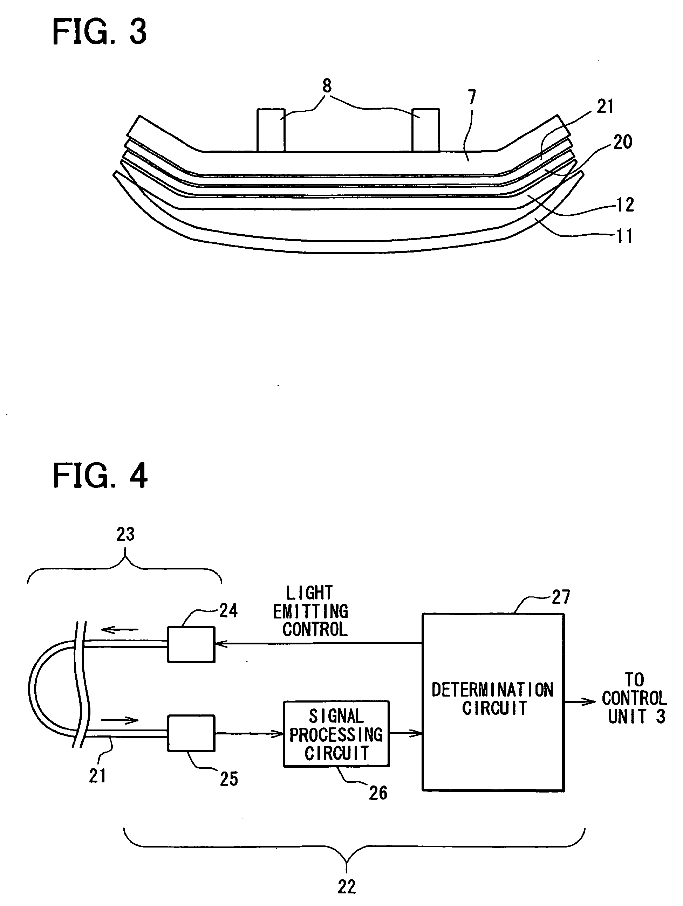

The front bumper 1 is located at a front part of the vehicle body 6. The front bumper 1 is composed of a bumper cover 11 and a bumper absorber 12 that is located on a rear side of the bumper cover 11. The bumper reinforcement member 7 is fixed at the front ends of a pair of side members 8, as shown in Figs. 2 and 3.

As shown in Fig. 4, the pedestrian collision sensor 2 includes the optical fiber unit 21, a light transmitting circuit 24, a light receiving circuit 25, a signal processing circuit 26, and a determination circuit 27. The light transmitting circuit 24 introduces light into the optical fiber unit 21 and the light receiving circuit 25 detects the light from the optical fiber unit 21. The signal processing circuit 26 converts a signal that is output from the light receiving circuit 25, into a digital signal after amplification.

The determination circuit 27 includes a microcomputer that processes the digital signal through a predetermined pedestrian discriminate routine, to thereby determine the collision of pedestrian. When it is determined that the vehicle collided with the pedestrian, the determination circuit 27 informs the pedestrian protection control unit 3 of the collision of the pedestrian. The pedestrian protection control unit 3 instructs the pillar air bag expansion device 4 to expand the pillar air bag 5 based on the information. The determination circuit 27 controls the light transmitting circuit 24.

The circuit unit 22 accommodates the light transmitting circuit 24, the light receiving circuit 25, the signal processing circuit 26 and the determination circuit 27 therein. The circuit unit 22 is for example arranged at a front left part of the vehicle. The optical fiber unit 21, the light transmitting circuit 24, and the light receiving circuit 25 construct an optical fiber sensor 23.

The optical fiber unit 21 is arranged in a substantially U-shape along the front surface of the bumper reinforcement member 7. Namely, the optical fiber unit 21 extends from the circuit unit 22, and further extends from a left end to a right end of the bumper reinforcement member 7 along the front surface of the bumper reinforcement member 7. At the right end of the bumper reinforcement member 7, the optical fiber unit 21 turns downward and further extends to the left end of the bumper reinforcement member 7. Then, the optical fiber unit 21 returns to the circuit unit 22. The optical fiber unit 21 has an optical fiber therein. The structure of the optical fiber will be described later.

The light transmitted from the light transmitting circuit 24 passes through the optical fiber of the optical fiber unit 21. Then, the light is photo-converted into a detection signal voltage in the light receiving circuit 25. The detection signal voltage is amplified to a predetermined degree and then converted into the digital signal in the signal processing circuit 26. Then, the signal is sent to the determination circuit 27. Accordingly, an occurrence of the pedestrian collision is determined by the determination circuit 27.

### (Structure of the Optical Fiber Unit 21)

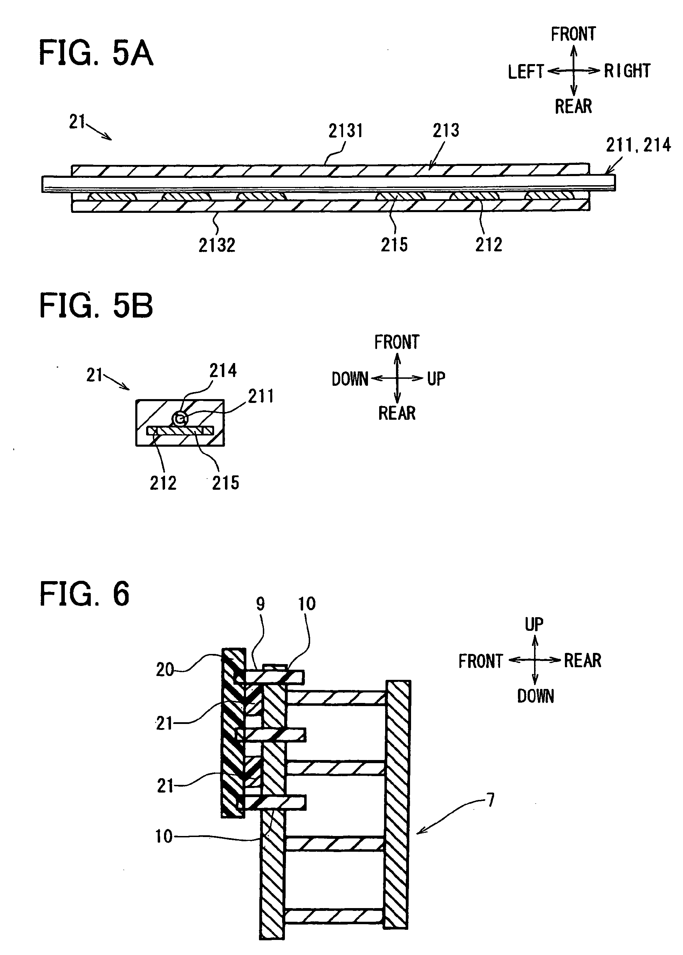

Referring to Figs. 5A and 5B, the optical fiber unit 21 has the optical fiber 211, a stress concentrating plate 212 and a silicone resin body 213. The optical fiber 211 extends in the right and left direction. The stress concentrating plate 212 is arranged vertically and extends in the right and left direction closely behind the optical fiber 211. The silicone resin body 213 embeds the optical fiber 211 and the stress concentrating plate 212 therein. The silicone resin body 213 has a rectangular-shaped vertical cross-section. The optical fiber 211 is covered with a rubber tube 214.

The stress concentration plate 212 is formed by punching a thin longitudinal metal plate and has a ladder shape including a plurality of vertical rungs 215. Each of the vertical rungs 215 contacts an outer circumferential surface of the rubber tube 214 and extends in a vertical direction. The silicone resin body 213 is disposed such that a first wall (front wall) 2131 contacts the rear wall of the load transmission plate 20 and a second wall (rear wall) 2132 contacts the front wall of the bumper reinforcement member 7. Alternatively, the silicone resin body 213 can be disposed such that the first wall 2131 contacts the front wall of the bumper reinforcement member 7 and the second wall 2132 contacts the rear wall of the load transmission plate 20.

Further, a second stress concentrating plate, which has a shape similar to that of the stress concentrating plate 212, can be added on the opposite side as the stress concentrating plate 212, with respect to the optical fiber 211. In this case, it is preferable that the rungs 215 of the stress concentrating plate 212 and the rungs of the second stress concentrating plate are staggered in the right and left direction. The structure of the optical fiber unit 21 is not limited to the structure illustrated in Figs. 5A and 5B. A conventional optical fiber unit or another optical fiber unit that causes light leakage by deformation can be employed as the optical fiber unit 21.

When the front bumper 1 receives a collision load in the substantially front and rear direction, the collision load is transmitted to the optical fiber unit 21 through the load transmission plate 20. In the optical fiber unit 21, the collision load is partly applied to the optical fiber 211 through the rungs 215 of the stress concentrating plate 212 because the silicone resin body 213 and the rubber tube 214 are easily elastically deformable. Therefore, the optical fiber 211 is bent at positions corresponding to the rungs 215 with positive correlation.

Thus, the quantity of light passing through the optical fiber 211 is decreased in accordance with the degree of the bents. Accordingly, in a case that a predetermined quantity of light is introduced to one end of the optical fiber 211 from the light transmitting circuit 214, the quantity of light transmitted to the light receiving circuit 25 from the opposite end of the optical fiber 211 correlates to the collision load. With this, the output signal from the light receiving circuit 25 changes with the intensity of the collision load.

### (Structure of Guiding Mechanism)

The load transmission plate 20 is supported through a load transmission plate guiding mechanism (hereafter, referred to as guiding mechanism), in front of the bumper reinforcement member 7. As shown in Fig. 6, the optical fiber unit 21 is located between the rear surface of the load transmission plate 20 and the front surface of the bumper reinforcement member 7. The optical fiber unit 21 extends in the right and left direction while contacting an upper half of the front surface of the bumper reinforcement member 7.

For example, the load transmission plate 20 is made of resin and has rigidity higher than that of the bumper cover 11. The load transmission plate 20 is arranged vertically and extends in the right and left direction. The bumper reinforcement member 7 has rigidity much higher than that of the load transmission plate 20.

The guiding mechanism includes an extending member and a guide member. For example, as the extending member, three front and rear extending members 9 are fixed on the rear surface of the load transmission plate 20, as shown in Fig. 6. The front and rear extending members 9 are arranged at predetermined intervals in a vertical direction. Each of the extending members 9 is molded with resin, for example. However, the extending member 9 is not limited to be made of resin.

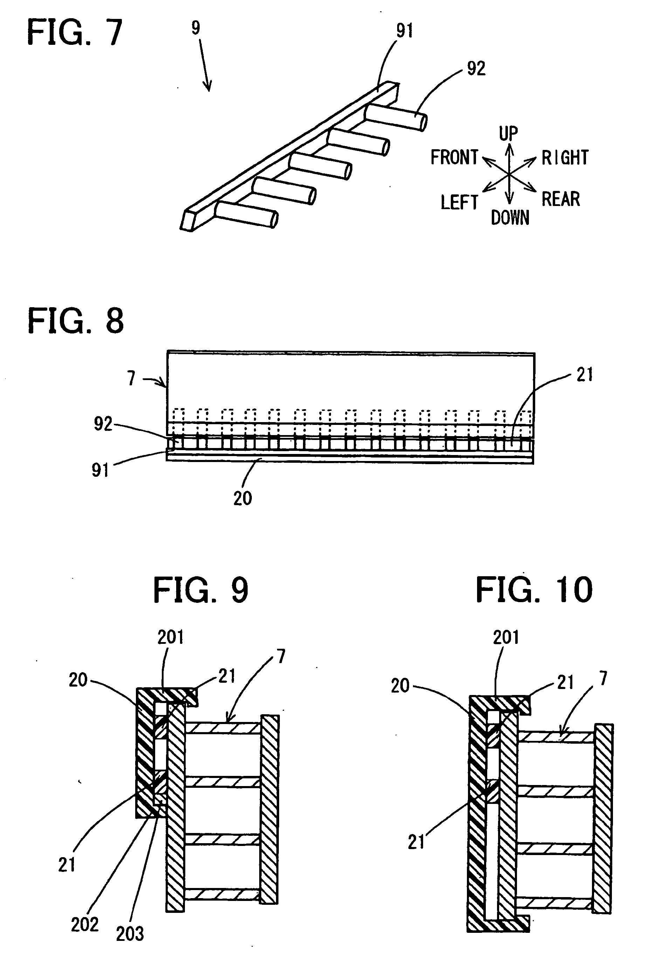

As shown in Fig. 7, each of the extending members 9 has a main portion 91 and five shaft portions 92 extending from the main portion 91. The main portion 91 has a stick shape having a rectangular shaped cross-section. Each of the shaft portions 92 has a stick shape having a circular cross-section. The extending member 9 is arranged such that the main portion 91 extends in the right and left direction of the vehicle and the shaft portions 92 extend in the rear direction.

In the example embodiment shown in Fig. 6, the main portion 91 is fitted in a longitudinal groove formed on the rear surface of the load transmission plate 20. Alternatively, the extending members 9 can be integrally molded with the load transmission plate 20.

On the front wall of the bumper reinforcement member 7, through holes 10 are formed as the guide member of the guiding mechanism. The shaft portions 92 pass through the through holes 10 in the front and rear direction. Accordingly, the load transmission plate 20 is supported movable in the front and rear direction with respect to the bumper reinforcement member 7.

The load transmission plate 20 has high rigidity and is supported to be movable in the substantially front and rear direction through the guiding mechanism. Even when the collision load is partly applied to the load transmission plate 20, the whole of the load transmission plate 20 is moved in the rear direction. Thus, it is less likely that the load transmission plate 20 will be partly deformed or bent in the rear direction. Namely, the guiding mechanism supports the load transmission plate 20 such that the load transmission plate 20 is more likely to be moved than elastically deformed by the collision load.

Since the whole of the load transmission plate 20 is moved toward the bumper reinforcement member 7, the collision load is effectively transmitted to a horizontally wide area of the optical fiber unit 21. Namely, it is less likely that the collision load will be partly applied to the optical fiber unit due to the shape of the collision object and a collided position in the longitudinal front bumper 1. Accordingly, unevenness of detecting sensitivity of the sensor 2 reduces.

Further, the guiding mechanism restricts the load transmission plate 20 from moving in the vertical direction more than a predetermined range. Even if the vehicle receives vertical vibrations due to load conditions while running, the load transmission plate 20 is sufficiently supported.

In the example embodiment shown in Figs. 6 to 8, a bore of each through hole 10 can be larger than a diameter of the shaft portion 92. Namely, the shaft portion 92 and the through hole 10 define a clearance between them. Therefore, even if the collision load is applied to the bumper cover 11 in the substantially rear direction, e.g., a diagonally rear direction, the load transmission plate 20 is moved in the substantially rear direction, e.g., in a slightly diagonally rear direction according to the collision load.

Here, the substantially front and rear direction and the substantially rear direction include a direction within a range of angle of 45 degree with respect to the front and rear direction of the vehicle on a horizontal surface. Therefore, even when the collision object has a velocity, or when the collision load has a vector in the front and rear direction and a vector in the right and left direction, particularly, at the right end or the left end of the front bumper 1, the load transmission plate 20 is effectively moved by the collision load. For example, even when the collision load is caused by a pedestrian falling over the front bumper 1 or even when the collision is caused while vehicle is spinning, the whole of the load transmission plate 20 is moved and the collision load is effectively transmitted to the optical fiber unit 21.

The load transmission plate 20 can be composed of a plurality of small load transmission members arranged sequentially in the right and left direction, instead of a single plate extending in the right and left direction. When the load transmission plate 20 is constructed of the plurality of small load transmission members, a moving direction of each of the small load transmission plate members can be different as long as within the above range of the angle.

The load transmission plate 20 can be supported by the part of the vehicle, e.g., the bumper reinforcement member 7 to be movable in a predetermined direction within the above range of angle with respect to the front and rear direction. In addition, the load transmission plate 20 can be supported to be movable in variable directions within the above range of angle with respect to the horizontally front and rear direction. Here, it is necessary that the load transmission plate 20 or the small load transmission members is/are more likely to be moved than partly elastically deformed by the collision load. Furthermore, a stopper can be provided for restricting the movement of the load transmission plate 20 within a predetermined range.

In the above example embodiment, the load transmission plate 20 is supported movable in the substantially rear direction for a necessary stroke at least, in front of the optical fiber unit 21. The guiding mechanism may include a mechanism that allows the load transmission plate 20 to rotate, as shown in Fig. 9.

In an example embodiment shown in Fig. 9, the optical fiber unit 21 extends in the right and left direction while contacting the upper half of the front surface of the bumper reinforcement member 7 between the rear surface of the load transmission plate 20 and the front surface of the bumper reinforcement member 7. Likewise, the load transmission plate 20 is made of resin and has rigidity higher than that of the bumper cover 11. The load transmission plate 20 is arranged in the vertical direction and extends in the right and left direction. The bumper reinforcement member 7 has rigidity much higher than that of the load transmission plate 20.

The load transmission plate 20 has an eave portion 210 that extends from the upper end of the load transmission plate 20 in the rear direction and a projection 202 that extends from the lower end of the load transmission plate 20 in the rear direction. The rear end of the eave portion 201 bends downward to form a stopper portion. From the front surface of the bumper reinforcement member 7, a projection 203 extends, at a position under the optical fiber unit 21 and above the projection 202. The bottom wall of the eave portion 201 contacts the top end of the bumper reinforcement member 7.

In this structure, an upward movement of the load transmission plate 20 is restricted because the projection 203 restricts an upward movement of the projection 202. Similarly, a downward movement of the load transmission plate 20 is restricted because the top wall of the bumper reinforcement member 7 restricts a downward movement of the eave portion 201. Accordingly, vertical movement of the load transmission plate 20 due to vertical vibration of the vehicle body is restricted.

The load transmission plate 20 is disposed such that the eave portion 201 is movable in the substantially front and rear direction while sliding along the top end of the bumper reinforcement member 7. Therefore, the load transmission plate 20 can sufficiently transmit the collision load to the optical fiber unit 21. In this case, if a length of the projection 202 in the rearward direction is short, the load transmission plate 20 is linearly movable in the rearward direction. If the length of the projection 202 in the rearward direction is long and the end of the projection 202 is in contact with the front surface of the bumper reinforcement member 7, the load transmission plate 20 rotates in a clockwise direction of Fig. 9 about the projection 202 as a rotation center.

Accordingly, the eave portion 201 and the top end of the bumper reinforcement member 7 construct the guiding mechanism. The eave portion 201 corresponds to the extending member, and the top end of the bumper reinforcement member 7 corresponds to the guide member.

The load transmission plate 20 has rigidity and is supported movable in the substantially rear direction through the guiding mechanism. In both cases, the load transmission plate 20 is more likely to be moved with respect to the bumper reinforcement member 7 than elastically deformed by the collision load. Therefore, the collision load can be widely applied to the optical fiber unit 21 while suppressing partial deformation of the optical fiber unit 21. Accordingly, the example embodiment shown in Fig. 9 provides advantageous effects similar to those of the example embodiment shown in Figs 6 to 8.

Further, the example embodiment shown in Fig. 9 can be modified as shown in Fig. 10. In the example embodiment shown in Fig. 10, the guiding mechanism is also formed at a bottom end of the load transmission plate 20, in addition to the top end.

The guiding mechanism formed at the bottom end of the load transmission plate 20 has a structure similar to the eave portion 201 and the top end of the bumper reinforcement member 7 shown in Fig. 9. In the example embodiment shown in Fig. 10, the load transmission plate 20 is supported to be wholly movable in the rear direction by the collision load. Accordingly, the example embodiment shown in Fig. 10 provides advantageous effects similar to those of the above example embodiments.

In the above example embodiments, the extending member 9 is provided on the load transmission plate 20 and the guide member 10 is formed on the bumper reinforcement member 7. Alternatively, the extending member 9 can be provided on the bumper reinforcement member 7 and the guide member 10 can be formed on the load transmission plate 20. The load transmission plate 20 is supported movable with respect to the bumper reinforcement member 7. Also in this case, the guide member 10 restricts the extending member 9 from moving in the vertical direction more than necessary at least.

In the example embodiments, the extending member 9 and the guide member 10 can define the clearance or a dimensional allowance between them so that the vertical movement and the movement in the right and left direction of the load transmission plate 20 with respect to the bumper reinforcement member 7 are allowed within the predetermined range. Further, the guiding mechanism restricts the load transmission plate 20 from separating and falling while supporting the load transmission plate 20 movable between the front bumper 1 and the optical fiber unit 21. Furthermore, the guiding mechanism restricts or prohibits the load transmission plate 20 from moving in a direction beyond the predetermined range.

The whole of the load transmission plate 20 is moved in the substantially rear direction irrespective of distribution pattern of the collision load in the right and left direction when the collision load is transmitted to the load transmission plate 20 from the front bumper 1. Therefore, the collision load is uniformly applied to a wide area of the optical fiber unit 21 with respect to the right and left direction. Thus, the unevenness of the detecting sensitivity of the optical fiber sensor due to the distribution pattern of the collision load in the right and left direction is reduced.

In the above example embodiment, the guide member 10 is formed on the bumper reinforcement member 7. Instead, the guide member 10 can be formed on a member fixed on the bumper reinforcement member 7. The guide member 10 can be formed by a groove, instead of the holes 10.

In the above example embodiments, the load transmission plate 20 and the optical fiber unit 21 are provided as separate parts. Instead, the load transmission plate 20 and the optical fiber unit 21 can be integrated. Further, the load transmission plate 20 can be disposed such that a main surface directly contacts the rubber tube 214. In this case, steps similar to the vertical rungs 215 of the stress concentrating plate 212 are formed on the main surface of the load transmission plate 20 at a predetermined pitch in the right and left direction, so the stress concentrating plate 212 can be omitted.

In the above embodiments, the pedestrian collision sensor 2 is arranged at the front bumper 1. The pedestrian collision sensor 2 of the above example embodiments can be provided on a rear bumper to detect a bump from the rear side.

The collision detecting apparatus can be used for a purpose other than for detecting the collision of the pedestrian. Also, the protection device used in connection with the collision detecting apparatus is not limited to the pillar air bag 5, but may be another air bag, e.g., an air bag for protecting a passenger on the vehicle.

## Claims

1. A collision detecting apparatus (2) for a vehicle including a bumper, reinforcement member (7) and a bumper (1), comprising:
an optical fiber sensor (23) including an optical fiber (211) that extends when mounted in a right and left direction of the vehicle between the bumper reinforcement member (7) and the bumper (1) of the vehicle and a light transmitting and receiving circuit (24, 25) for introducing light to the optical fiber (211) and detecting the light from the optical fiber (211); and
a collision detecting circuit (27) for detecting information relating to a collision load applied to the bumper (1) based on a change of an output signal of the optical fiber sensor due to a deformation of the optical fiber (211) at a time of collision; and
a load transmission plate (20) disposed to extend when mounted in the right and left direction between the bumper (1) and the optical fiber (211) for transmitting the collision load to the optical fiber (211), the collision detecting apparatus (2) **characterized by** further comprising:
a guiding mechanism including an extending member (9, 21, 201) and a guide member (10), and supporting the load transmission plate (20) in a manner that the load transmission plate (20) is moved when mounted in a substantially front and rear direction with respect to the bumper reinforcement member (7) instead of being elastically deformed by the collision load,
the extending member (9, 21, 201) being provided on one of the load transmission plate (20) and the bumper reinforcement member (7),
the guide member (10) being provided on the other one of the load transmission plate (20) and the bumper reinforcement member (7) and receives the extending member (9, 21, 201) in a manner that the extending member (9, 21, 201) is movable in the substantially front and rear direction,
wherein the extending member includes a shaft portion (92) projecting in the substantially front and rear direction, and
the guide member (10) is defined by one of a hole or a groove and receives the shaft portion (9) in the substantially front and rear direction.

2. The collision detecting apparatus (2) according to claim 1, wherein the guide member (10) receives the extending member (9, 201) in a manner restricting a vertical movement of the extending member (9, 201) within a predetermined range.

3. The collision detecting apparatus (2) according to claim 1, wherein
the extending member (9) and the guide member (10) have a dimensional allowance therebetween to allow the extending member to move in the vertical direction and the right and left direction within a predetermined range.

4. The collision detecting apparatus (2) according to claim 1 or 3, wherein
the extending member (9) includes a main portion (91) extending in the right and left direction and a plurality of shaft portions (92) including said shaft portion (92), and
the shaft portions (92) extend from the extending portion (91) and arranged at predetermined intervals in a longitudinal direction of the main portion (91).

5. The collision detecting apparatus (2) according to any one of claims 1, 3 and 4, wherein the extending member(9) is held on the load transmission plate (20) and the guide member (10) is formed on one of the bumper reinforcement member (7) and a member fixed to the bumper reinforcement member (7).

6. The collision detecting apparatus (2) according to claim 1 or 2, wherein
the extending member has an eave portion (201) extending from at least one of a top end and a bottom end of the load transmission plate (20) toward the bumper reinforcement member (7), and
the eave portion (201) is disposed movable in the substantially front and rear direction along at least one of a top end and a bottom end of the bumper reinforcement member (7).

## Patentansprüche

1. Kollisionserfassungsvorrichtung (2) für ein Fahrzeug mit einem Stoßfänger-Verstärkungselement (7) und einem Stoßfänger (1), aufweisend:
einen optischen Fasersensor (23), der eine optische Faser (211) aufweist, die sich nach dem Einbau zwischen dem Stoßfänger-Verstärkungselement (7) und dem Stoßfänger (1) des Fahrzeugs in Links-Rechts-Richtung des Fahrzeugs erstreckt, und eine Licht aussendende und auffangende Schaltung (24, 25) zum Einleiten von Licht in die optische Faser (211) und zum Erfassen des Lichts aus der optischen Faser (211); und
eine Kollisionserfassungsschaltung (27) zum Erfassen von Informationen in Bezug auf eine Kollisionskraft, mit welcher der Stoßfänger (1) beaufschlagt wird, auf Basis einer Änderung eines Ausgangssignals des optischen Fasersensors aufgrund einer Verformung der optischen Faser (211) bei der Kollision; und
eine Kraftübertragungsplatte (20), die nach dem Einbau so angeordnet ist, dass sie sich zwischen dem Stoßfänger (1) und der optischen Faser (211) in Rechts-Links-Richtung des Fahrzeugs erstreckt, um die Kollisionskraft auf die optische Faser (11) zu übertragen,
wobei die Kollisionserfassungsvorrichtung (2) **dadurch gekennzeichnet ist, dass** sie ferner aufweist:
einen Führungs-mechanismus, der ein längliches Element (9, 21, 201) und ein Führungs-element (10) aufweist, und der die Kraftübertragungsplatte (20) derart trägt, dass die Kraftübertragungsplatte (20) nach dem Einbau im Wesentlichen in Vorwärts-Rückwärts-Richtung in Bezug auf das Stoßfänger-Verstärkungselement (7) bewegt wird, statt von der Kollisionskraft elastisch verformt zu werden, wobei das längliche Element (9, 21, 201) entweder an der Kraftübertragungsplatte (20) oder am Stoßfänger-Verstärkungselement (7) vorgesehen ist,
wobei das Führungs-element (10) am jeweils anderen von den beiden, nämlich der Kraftübertragungsplatte (20) oder dem Stoßfänger-Verstärkungselement (7) vorgesehen ist und das längliche Element (9, 21, 201) derart aufnimmt, dass das längliche Element (9, 21, 201) sich im Wesentlichen in Vorwärts-Rückwärts-Richtung bewegen kann,
wobei das längliche Element einen Stababschnitt (92) aufweist, der im Wesentlichen in Vorwärts-Rückwärts-Richtung vorsteht, und
das Führungs-element (10) entweder durch ein Loch oder eine Nut definiert ist und den Stababschnitt (9) im Wesentlichen in Vorwärts-Rückwärts-Richtung aufnimmt.

2. Kollisionserfassungsvorrichtung (2) nach Anspruch 1, wobei das Führungs-element (10) das längliche Element (9, 201) derart aufnimmt, dass eine vertikale Bewegung des länglichen Elements (9, 201) auf einen vorgegebenen Bereich beschränkt ist.

3. Kollisionserfassungsvorrichtung (2) nach Anspruch 1, wobei
das längliche Element (9) und das Führungs-element (10) eine gegenseitige Abmessungstoleranz aufweisen, um zu ermöglichen, dass das längliche Element sich innerhalb eines vorgegebenen Bereichs in der vertikalen Richtung und in Rechts-Links-Richtung bewegt.

4. Kollisionserfassungsvorrichtung (2) nach Anspruch 1 oder 3, wobei
das längliche Element (9) einen Hauptabschnitt (91) aufweist, der sich in Rechts-Links-Richtung erstreckt, sowie eine Mehrzahl von Stababschnitten (92), zu denen auch der Stababschnitt (92) gehört, und
wobei die Stababschnitte (92) vom länglichen Abschnitt (91) ausgehen und mit vorgegebenen Abständen in Längsrichtung des Hauptabschnitts (91) angeordnet sind.

5. Kollisionserfassungsvorrichtung (2) nach einem der Ansprüche 1, 3 und 4, wobei das längliche Element (9) an der Kraftübertragungsplatte (20) gehalten wird und das Führungs-element (10) am Stoßfänger-Verstärkungselement (7) oder an einem Element ausgebildet ist, das am Stoßfänger-Verstärkungselement (7) befestigt ist.

6. Kollisionserfassungsvorrichtung (2) nach Anspruch 1 oder 2, wobei
das längliche Element einen Übergreifungs-abschnitt (201) aufweist, der vom oberen und/oder vom unteren Ende der Kraftübertragungsplatte (20) ausgehend in Richtung auf das Stoßfänger-Verstärkungselement (7) verläuft, und
der Übergreifungs-abschnitt (201) am oberen Ende und/oder am unteren Ende des Stoßdämpfer-Verstärkungselements (7) so angeordnet ist, dass er sich im Wesentlichen in Vorwärts-Rückwärts-Richtung bewegen kann.

## Revendications

1. Appareil (2) de détection de collision pour un véhicule comportant un élément (7) de renfort de pare-chocs et un pare-chocs (1), comprenant :
un capteur à fibre optique (23) comportant une fibre optique (211) qui s'étend lorsqu'elle montée dans des directions droite et gauche du véhicule entre l'élément (7) de renfort de pare-chocs et le pare-chocs (1) du véhicule et un circuit (24, 25) de réception et de transmission de lumière destiné à faire rentrer de la lumière dans la fibre optique (211) et à détecter la lumière issue de la fibre optique (211) ; et
un circuit (27) de détection de collision destiné à détecter des informations relatives à une charge de collision s'appliquant sur le pare-chocs (1) sur la base d'un changement au niveau d'un signal de sortie du capteur à fibre optique à cause d'une déformation de la fibre optique (211) au moment d'une collision ; et
une plaque (20) de transmission de charge disposée pour s'étendre lorsqu'elle est montée dans les directions droite et gauche entre le pare-chocs (1) et la fibre optique (211) pour transmettre la charge de collision à la fibre optique (211), l'appareil (2) de détection de collision **caractérisé par** le fait de comprendre en outre :
un mécanisme de guidage comportant un élément d'extension (9, 21 , 201) et un élément de guidage (10), et supportant la plaque (20) de transmission de charge pour que la plaque (20) de transmission de charge se déplace lorsqu'elle montée dans des directions sensiblement avant et arrière par rapport à l'élément de renfort de pare-chocs (7) au lieu de se déformer de manière élastique par la charge de collision,
l'élément d'extension (9, 21, 201) étant prévu sur l'un(e) parmi la plaque (20) de transmission de charge et l'élément de renfort de pare-chocs (7),
l'élément de guidage (10) étant prévu sur l'autre de la plaque (20) de transmission de charge et de l'élément de renfort de pare-chocs (7) et reçoit l'élément d'extension (9, 21, 201) pour que l'élément d'extension (9, 21, 201) soit mobile dans les directions sensiblement avant et arrière,
où lorsque l'élément d'extension comporte une partie d'arbre (92) se projetant dans les directions sensiblement avant et arrière, et
l'élément de guidage (10) est défini par l'un(e) parmi un trou ou une rainure et reçoit la partie d'arbre (9) dans les directions sensiblement avant et arrière.

2. Appareil (2) de détection de collision selon la revendication 1, dans lequel l'élément de guidage. (10) reçoit l'élément d'extension (9, 201) de manière à empêcher un mouvement vertical de l'élément d'extension (9, 201) dans un périmètre prédéterminé.

3. Appareil (2) de détection de collision selon la revendication 1, dans lequel
l'élément d'extension (9) et l'élément de guidage (10) ont une tolérance dimensionnelle entre eux permettant à l'élément d'extension de se déplacer dans la direction verticale et dans les directions droite et gauche dans un périmètre prédéterminé.

4. Appareil (2) de détection de collision selon la revendication 1 ou 3, dans lequel
l'élément d'extension (9) comporte une partie principale (91) s'étendant dans les directions droite et gauche et une pluralité de parties d'arbre (92) comportant ladite partie d'arbre (92), et
les parties d'arbre (92) s'étendent de la partie d'extension (91) et agencées à intervalles prédéterminés dans une direction longitudinale de la partie principale (91).

5. Appareil (2) de détection de collision selon l'une quelconque des revendications 1, 3 et 4,
dans lequel l'élément d'extension (9) est maintenu sur la plaque (20) de transmission de charge et l'élément de guidage (10) est formé sur l'un parmi l'élément de renfort de pare-chocs (7) et un élément fixé à l'élément de renfort de pare-chocs (7).

6. Appareil (2) de détection de collision selon la revendication 1 ou 2, dans lequel
l'élément d'extension a une partie de corniche (201) s'étendant à partir d'au moins l'une d'une extrémité supérieure et d'une extrémité inférieure de la plaque (20) de transmission de charge vers l'élément de renfort de pare-chocs, et
la partie de corniche (201) est mobile dans les directions sensiblement avant et arrière le long d'au moins l'une d'une extrémité supérieure et d'une extrémité inférieure de l'élément de renfort de pare-chocs (7).
